Europäisches Patentamt

(19) European Patent Office

Office européen des brevets

(11) Publication number: **0 136 596**
**B1**

(12) **EUROPEAN PATENT SPECIFICATION**

(45) Date of publication of patent specification: **11.05.88**

(21) Application number: **84110707.1**

(22) Date of filing: **07.09.84**

(51) Int. Cl.⁴: **C 08 L 27/16**, C 08 L 27/18, C 08 J 3/24 // (C08L27/16, 27:20, 27:18),(C08L27/18, 23:14)

(54) Covulcanizable compositions of fluoroelastomers based on vinylidene fluoride and tetrafluoroethylene-propylene copolymers.

(30) Priority: **07.09.83 IT 2279783**

(43) Date of publication of application:
**10.04.85 Bulletin 85/15**

(45) Publication of the grant of the patent:
**11.05.88 Bulletin 88/19**

(84) Designated Contracting States:
**BE DE FR GB NL**

(56) References cited:
**US-A-4 200 568**

(73) Proprietor: **AUSIMONT S.p.A.**
**31, Foro Buonaparte**
**I-20121 Milano (IT)**

(72) Inventor: **Geri, Sergio, Dr.**
**57, via Lattanzio**
**Milano (IT)**
Inventor: **Moggi, Giovanni**
**14, via Galilei**
**Milano (IT)**
Inventor: **Lagana, Carlo**
**6, via Anzani**
**Milano (IT)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel**
**Dipl.-Ing. S. Schubert Dr. P. Barz**
**Siegfriedstrasse 8**
**D-8000 München 40 (DE)**

Courier Press, Leamington Spa, England.

## Description

In the development of fluorinated elastomers, well defined needs have recently been emphasized, i.e.:

1) the chemical stability, also under strict conditions of operating temperatures, in the presence of lubricating fluids characterized by a high agressiveness, such as the oils of the SF series to which amino compounds have been added having a high swelling power towards the fluoroelastomers based on vinylidene fluoride;
2) a general improvement in the processing characteristics of the molding blends for manufactured articles such as oil retainer rings;
3) the possibility of extruding the blends easily, in order to obtain suitable premolds.

US—A—42 00 568 discloses a cross-linkable composition comprising polyvinylidene fluoride and a fluoroelastomer, said fluoroelastomer being a copolymer of vinylidene fluoride and hexafluoropropylene and/or pentafluoropropylene. Diamine carbamates as crosslinking agents may also be present. Articles formed from said compositions are reported to have improved notch impact toughness and elongation at rupture.

The above mentioned requirements can be met according to the present invention, by covulcanization of an elastomeric composition comprising:

a) a fluoroelastomer (A) based on vinylidene fluoride (40—83% by moles), perfluoropropene (15—35%) and tetrafluoroethylene (0—30%), in an amount of 42—70% by weight, based on the total elastomeric composition;

b) an amino compound (B) suitable for vulcanizing fluoroelastomers selected from the Schiff bases or the diamine carbamates, in an amount of 1—4% by weight, based on the total elastomeric composition;

c) a copolymer (C) of tetrafluoroethylene (40—60% by moles) and propylene (60—40%) in an amount of 51—22% by weight, based on the total elastomeric composition;

d) an organic peroxide (D) as vulcanizing agent, in an amount of 0.4—5% by weight, based on the total elastomeric composition.

Suitable amino compounds are the ones already known as suitable for the vulcanization of fluoroelastomers: among others, they are described in Rubber World *141* (1960), page 827; as examples thereof may be mentioned: hexamethylenediamine carbamate, the Schiff base of cinnamic aldehyde and hexamethylenediamine, and propanediamine carbamate.

Preferably the above composition also contains a vulcanizing coagent known from the vulcanization of the fluoroelastomers with peroxides, consisting of a polyfunctional compound, such as triallylisocyanurate, triallylcyanurate, divinylbenzene, etc. Such a coagent is used in an amount of 2—4% by weight, based on whe total elastomeric composition.

It is assumed that in the covulcanization of the above composition a vulcanized product is formed, having a network system like the one described as "interpenetrating polymer network" (see Enc. of Polymer Sci. and Technol. suppl. volume 1, page 288, 1977).

The network of both polymers, type A being formed by an ionic mechanism by means of the amino compound and type C being formed by a radical mechanism by means of the peroxide, represents a new structure which is formed according to a method different from the ones generally described for this class of vulcanizates having an interpenetrating network (see above cited literature).

The elastomeric vulcanizable composition according to the invention furthermore contains the usual additives for such elastomers, in particular basic substances such as MgO, PbO, calcium hydroxide and carbon black.

The vulcanization operating conditions are substantially the same as those used for fluoroelastomers: generally a first heating is carried out in a press, followed by the heating of the manufactured article in an oven for a prolonged period of time.

For illustrative purposes vulcanizable compositions according to this invention were prepared and for comparative purposes vulcanizable compositions were prepared according to the prior art, starting from the following elastomers:

Tecnoflon NM®: a copolymer of vinylidene fluoride (79% by moles) and hexafluoropropene (21%).

Tecnoflon TN®: a terpolymer of vinylidene fluoride (65% by moles), hexafluoropropene (20%) and tetrafluoroethylene (15%).

Polymeric composition AB.30: a mixture of 70 parts by weight of Tecnoflon NM® and 30 parts by weight of AFLAS 150®, a copolymer containing equimolar amounts of tetrafluoroethylene and propylene, produced by Ashahi Glass.

Polymeric composition AB.40: like AB.30, but containing 40% of AFLAS 150®.

Other ingredients used for the preparation of the vulcanizable compositions:

— triallylisocyanurate (TAIC)
— triallylcyanurate (TAC)
— benzyl-tris (dimethylaminophosphonium) tetrafluoroborate ($BTPBF_4$)

2

**0 136 596**

— Luperco 101 XL®: 2,5-dimethyl-2,5-di-tert-butylperoxyhexane, in the form of a mixture with an inert filler, with a peroxide content of 40%.
— Tecnocin A®: a Schiff base of cinnamic aldehyde and hexamethylenediamine.

The data relating to two compositions according to the present invention (compositions 2 and 3) and to vulcanizable compositions according to the prior art (compositions 1, 4 and 5) is listed in the following Table 1.

Table 2 lists data relating to steam resistance obtained from a composition of the present invention (composition 6) and one of the prior art (composition 7).

The amounts are expressed in parts by weight.

TABLE 1

| | Composition No. | | | | |
|---|---|---|---|---|---|
| | 1 | 2 | 3 | 4 | 5 |
| Tecnoflon TN® | | | | 100 | 100 |
| Tecnoflon NM® | 100 | — | — | — | — |
| Composition AB.30 | — | 100 | — | — | — |
| Composition AB.40 | — | — | 100 | — | — |
| Tecnocin A® | — | 3 | 2.5 | — | 3 |
| Bisphenol AF | 1.8 | — | — | 2.4 | — |
| BTPBF$_4$ | 0.4 | — | — | 0.6 | — |
| Maglite DE® (MgO) | 3 | 5 | 5 | 3 | 15 |
| Calcium Hydroxide | 6 | — | — | 6 | — |
| Luperco 101 XL® | — | 1.5 | 1.8 | — | — |
| Talc | — | 1.5 | 1.8 | — | — |
| Carbon Black MT | 20 | 20 | 20 | — | 20 |
| Carnauba Wax | 1 | 1 | 1 | 1 | 1 |
| Vulcanization at 175°C×8′ in press, then at 200°C×24 hours in oven | | | | | |
| Initial physical characteristics: Tensile strength N/mm² | 15 | 16 | 15.5 | 15.5 | 14 |
| Elongation at break % | 190 | 270 | 230 | 200 | 200 |
| Hardness Shore A | 73 | 72 | 71 | 74 | 73 |
| Compression set B% 150°C×22 hours +3 cooling hours | 25 | 61 | 65 | 36 | 52 |
| Bondability (Shaft seal moulding at 180°C×7′) | −16 | −4 | −3 | −14 | −14 |

3

**0 136 596**

TABLE 1 (Cont'd)

| | Composition No. | | | | |
|---|---|---|---|---|---|
| | 1 | 2 | 3 | 4 | 5 |
| **Stability test:** | | | | | |
| Towards oils SF=Tested lubricant | | | | | |
| Shell super-3 15W40 | | | | | |
| Dipping test ASTM D471 at the indicated | | | | | |
| temperature for 168 hours | | | | | |
| **Test at 150°C** | | | | | |
| a) Tensile strength variation, % | −19 | +2 | +4 | −8 | −15 |
| b) Elongation variation at break, % | −10 | +7 | +15 | −12 | −8 |
| c) Hardness Shore variation | −1 | −2 | −2 | −1 | −1 |
| **Test at 170°C** | | | | | |
| a) Tensile strength variation, % | −34 | +5 | +8 | −10 | — |
| b) Elongation variation at break, % | −34 | +2 | +4 | −13 | — |
| c) Hardness Shore variation | −2 | −2 | −2 | −2 | — |
| **Test at 200°C** | | | | | |
| a) Tensile strength variation, % | −54 | −8 | −8 | −25 | — |
| b) Elongation variation at break, % | −34 | −6 | −5 | −20 | — |
| c) Hardness Shore variation | −2 | −2 | −2 | −2 | — |
| Surface appearance: | rough | smooth | smooth | | |

4

**0 136 596**

TABLE 2
Steam resistance

| | Composition No. | |
| --- | --- | --- |
| | 6 | 7 |
| Tecnoflon NM® | — | 100 |
| Composition AB.30 | 100 | — |
| PbO | 10 | 10 |
| Carbon Black MT | 25 | 25 |
| Luperco 101 XL® | 1.5 | — |
| Talc | 1.5 | — |
| Carnauba Wax | 1 | 1 |
| Bisphenol AF | — | 2 |
| BTPBF$_4$ (GM 104) | — | 0.5 |
| Tecnocin A® | 2.5 | — |

Vulcanization: in press at 170°C for 8', in oven at 200°C for 24 hours

Physical characteristics

I. Product (6) as such:
  a) tensile strength N/cm$^2$      1375 (140 Kg/cm$^2$)

  b) elongation %      250

  c) hardness      71

II. After treatment in water at 160°C for 7 days:
  a)=1080 (110)

  b)=290

  c)=68

  d) volume variation+2.5%

III. Product (7) as such:
  a)=1570 (160)

  b)=180

  c)=73

IV. H$_2$O 160°(×7 days):
  a)=1180 (120)

  b)=165

  c)=65

  d) volume variation+10%

**0 136 596**

**Claim**

Composition of elastomers suitable to be vulcanized, comprising:

a) a fluoroelastomer based on vinylidene fluoride (40—83% by moles), perfluoropropene (15—35%) and tetrafluoroethylene (0—30%), in an amount of 42—70% by weight, based on the total elastomeric composition;

b) an amino compound suitable for vulcanizing fluoroelastomers selected from the Schiff bases or the diamine carbamates, in an amount of 1—4% by weight, based on the total elastomeric composition;

c) a copolymer of tetrafluoroethylene (40—60% by moles) and propylene (60—40%) in an amount of 51—22% by weight, based on the total elastomeric composition;

d) an organic peroxide as vulcanizing agent, in an amount of 0.4—5% by weight, based on the total elastomeric composition.

**Patentanspruch**

Zusammensetzung von Elastomeren, die zum Vulkanisieren geeignet sind, die umfaßt:

a) ein Fluorelastomer auf der Basis von Vinylidenfluorid (40 bis 83 Mol-%), Perfluorpropen (15 bis 35%) und Tetrafluorethylen (0 bis 30%) in einer Menge von 42 bis 70 Gew.-%, bezogen auf die gesamte elastomere Zusammensetzung;

b) eine Aminoverbindung, die zum Vulkanisieren von Fluorelastomeren geeignet ist, ausgewählt aus den Schiffschen Basen oder Diamincarbamaten, in einer Menge von 1 bis 4 Gew.-%, bezogen auf die gesamte elastomere Zusammensetzung;

c) ein Copolymer aus Tetrafluorethylen (40 bis 60 Mol-%) und Propylen (60 bis 40%) in einer Menge von 51 bis 22 Gew.-%, bezogen auf die gesamte elastomere Zusammensetzung;

d) ein organisches Peroxid als Vulkanisationsmittel in einer Menge von 0,4 bis 5 Gew.-%, bezogen auf die gesamte elastomere Zusammensetzung.

**Revendication**

Composition d'élastomères destinée à être vulcanisée comprenant:

a) un fluoroélastomère à base de fluorure de vinylidène (de 40 à 83% en moles), de perfluoropropène (de 15 à 35%) et de tétrafluoroéthylène (de 0 à 30%), en une quantité de 42 à 70% en poids par rapport à l'ensemble de la composition élastomère;

b) un composé amino apte à vulcaniser des fluoroélastomères, choisi parmi les bases de Schiff ou les carbamates de diamine, en quantité de 1 à 4% en poids, par rapport à l'ensemble de la composition élastomère;

c) un copolymère de tétrafluoroéthylène (de 40 à 60% en moles) et de propylène (de 60 à 40%), en une quantité de 51 à 22% en poids, par rapport à l'ensemble de la composition élastomère;

d) un peroxyde organique en tant qu'agent de vulcanisation, en une quantité de 0,4 à 5% en poids, par rapport à l'ensemble de la composition élastomère.

6